# EUROPEAN PATENT SPECIFICATION

(11) **EP 1 102 687 B1**
(45) Date of publication and mention of the grant of the patent: **30.07.2008**
(21) Application number: 99932564.0
(22) Date of filing: 29.07.1999
(51) Int. Cl.: B60G 17/052, B60G 11/27, B60G 13/10, B60G 21/067

(54) **VEHICLE SUSPENSION WITH LINKED AIR BAGS**
FAHRZEUGAUFHÄNGUNG MIT MITEINANDER VERBUNDENEN LUFTFEDERN
SUSPENSION DE VEHICULE A BALLONS D'AIR RELIES

(30) Priority: 29.07.1998 AU PP491698; 25.08.1998 AU PP545098; 09.03.1999 AU PP907699
(43) Date of publication of application: 30.05.2001
(73) Proprietor: Haire, Angela Kate, Wodonga, VIC 3690 (AU); Haire, William Arthur, Wodonga, VIC 3690 (AU)
(72) Inventor: HAIRE, William, Arthur, Wodonga, VIC 3690 (AU)
(74) Representative: Anderson, James Edward George
(86) International application number: PCT/AU1999/000605
(87) International publication number: WO 2000/006400

(56) References cited:
- US-A- 2 973 968
- US-A- 2 998 261
- US-A- 3 063 732
- US-A- 3 201 141
- US-A- 3 433 493
- US-A- 3 499 662
- US-A- 3 552 763
- US-A- 3 782 753
- US-A- 5 046 752
- US-A- 5 374 077
- PATENT ABSTRACTS OF JAPAN vol. 018, no. 526 (M-1683), 5 October 1994 (1994-10-05) & JP 06 183244 A (MITSUBISHI MOTORS CORP), 5 July 1994 (1994-07-05)
- PATENT ABSTRACTS OF JAPAN vol. 007, no. 244 (M-252), 28 October 1983 (1983-10-28) & JP 58 128913 A (HINO JIDOSHA KOGYO KK), 1 August 1983 (1983-08-01)
- DATABASE WPI Week 199632, Derwent Publications Ltd., London, GB; Class Q12, AN 1996-318124, XP002992870 & JP 8 142 631 A (HINO MOTORS LTD) 04 June 1996
- DATABASE WPI Week 198437, Derwent Publications Ltd., London, GB; Class Q12, AN 1984-150279, XP002992871 & SU 1 043 041 A (KLUSHIN V P) 23 September 1983

## Description

### Field of the invention

This invention relates to improvements in vehicle suspension and refers particularly to improvements in vehicle suspension wherein air bags (sometimes referred to as air springs) are used as an integral component in the vehicle suspension.

### Definitions

Throughout this specification reference to a vehicle is to be taken as including reference to a bus, coach, truck, trailer, prime mover, tractor, or any other suitably wheeled vehicle.

### Background to the invention

Air bags have been used in the suspension system of vehicles for some time. For example, they have been used on trucks, trailers, buses, coaches, and the like, for many years. They generally provide an improved ride over highway surfaces, particularly on relatively smooth surfaces.

In multi-axle air bag systems, or single-axle, multi-air bag systems, the air bags are joined by a small diameter, low flow-rate tube so that the air bags can be inflated relatively equally to provide an even height of the suspension of the vehicle above the ground.

However, they have shown to have great difficulty over rough terrain, particularly when multi-wheeled drives are used. For example, for a coach passing over a kerb, fallen log or the like, quite often the forward of the rear wheels will rise on the kerb lifting the rear wheels off the ground surface. Naturally, all drive is provided to the rear wheels thus stranding the coach. Similar problems can arise with trucks or other vehicles with lazy axles when travelling over uneven roads, or when traversing natural terrain. This quite often occurs with livestock carriers in attempting to collect livestock, collecting and/or delivering large quantities of hay, straw, earth-moving equipment, farming equipment, and the like.

The air bags are supplied with air from an air tank, but again a small-diameter low flow-rate air tube is used. Its sole purpose is to allow the air bags to be inflated and deflated to vary the height of the vehicle above the ground.

The low flow-rate air tubes cannot cope with sudden changes in pressure within an air bag and cannot quickly equalise the pressure within and between the air bags.

Furthermore, with air bag suspension in multi-axle vehicles it can be difficult to drive on a ramp or the like as the height valve will attempt to inflate all air bags, thus lifting one set of wheels off the ramp to prevent further progress along the ramp.

A further problem with air bag suspensions is that when encountering a roughened or uneven road surface such as a railway crossing, the vehicle suspension will continue to oscillate (tramp) for some distance after the encounter. This can cause damage to the road surface.

There have been a number of proposals for overcoming these problems with air bag suspensions. For example, in Australian patent 567, 664 there is disclosed an air bag suspension whereby there is an air tank mounted in the vehicle chassis directly above the air bags, and short large diameter air ducts connect each air bag to the air tank. This had as its aim the maintaining of the air pressure in each air bag relatively constant irrespective of the axle position to thus reduce excessive movement of the vehicle body. There is also proposed the elimination of restricting flow lines connecting the air bags to the airtank. Each side of the vehicle has its own air tank, with the air tanks optionally being connected.

This system did not solve the problems identified above as when the axle moved upwardly due to an irregularity in the road surface, the air inside the air bag and the air tank was compressed under load. When the irregularity in the road surface was passed, the pressure in the air tank would force the axle down without load.

As there was no restriction in the air duct, this would happen at great speed, thus forcing the tyre onto the road surface with great impact.

Due to the resilience of a pneumatic tyre, the rebound would be sufficient to again compress the air in the air bag and air tank under load. As a result, the cycle continued - an effect called tramping. Shock absorbers, more correctly called dampers, were required to overcome the tramping.

Australian patent application 69220/87 is also directed at some of the problems mentioned above, but in particular at the damping of shock loads on the suspension system. There the air bags are in direct communication with a large air tank which supplies air under pressure to the air bags. This is the same as for Australian patent 567,664. With this latter proposal, there is a secondary air tank mounted within the air tank and in operative communication therewith through a restricted opening. The secondary air tank and the restricted opening combine to assist in the dampening of shock loads on the suspension. However, with the speed of operation, the large volume of air in the air tank and the large size of the openings from the air bags to the air tank meant that there was no effective dampening of tramping, and the system could not cope with uneven loads due to uneven terrain.

It is therefore the principal object of the present invention to provide improvements in suspension for vehicles wherein these problems are addressed.

JP 8142631 discloses a suspension system for improving the stability between an axle pair. The system incorporates a shut off valve on each of a pair of air tubes communicating with airbags. Air communication between a rear airbag and a sub airbag is selectively closed when air pressure to a rear airbag is required. An exhaust valve is opened to discharge air from the sub airbag when the axle load is reduced and, at the same time, the axle load on a front axle is increased to secure traction. The system, however, requires the use of valves in the air circuit responsive to air pressure demands.

### Brief description of the invention

According to the present invention there is provided an air suspension system for use with a vehicle having wheels, the suspension system including: at least two air bags arranged as a first air bag and a second air bag for controlling relative movement between the wheel and a chassis of the vehicle, and air supply means for supplying air to the air bags, characterised in that the suspension system further comprises: a high flow-rate air tube operatively connected between the first air bag and the second air bag, wherein the high flow-rate air tube forms a manifold to which air is passed from an air bag when air pressure in that air bag increases above air pressure in the manifold; and air flow controlling orifices provided between the air bags and the high flow-rate air tube for slowing the flow of air into the air bags, the controlling orifices being a reduction in diameter compared to that of the high flow-rate air tube.

The wheels may be arranged as a forward wheel on a forward axle, and a rear wheel on a rear axle; the forward air bag being operatively connected to the forward axle and the rear air bag being operatively connected to the rear axle.

The wheels may be located on either side of the vehicle and there may be an air bag on either side of the vehicle. Preferably the air bags on each side of the vehicle are also operatively joined.

The front axle and/or the rear axle may have two air bags, one on either side of the respective axle. In that case, it is preferred that the air bags of each axle are operatively joined to each other, as well as to the air bags of the other axle.

Preferably, the operative connection is by means of a high diameter air tube. More preferably, the rate air tube has a forward end with a forward fitting, and a rear end with a rear fitting. Advantageously, the forward fitting and/or the rear fitting has a controlling orifice therein to control the high rate of air flow in the air tube.

The air tube may also function as an air manifold. Alternatively or additionally, a separate but integral manifold may be provided on one or more of the forward fitting, rear fitting, and the air tube.

### Brief description of the drawings

In order that the invention may be fully understood there shall now be described by way of non-limitative example only preferred constructions of improvements in vehicle suspension incorporating the principal features of the present invention, the description being with reference to the accompanying illustrative drawings in which:
Figure 1 is a schematic side view of a first embodiment;
Figure 2 is a schematic side view of a second embodiment;
Figure 3 is a schematic side view of a third embodiment being a modification suitable for use with the embodiments of Figures 1 and 2;
Figure 4 is a side view of a fourth embodiment as fitted to a steering axle of a vehicle;
Figure 5 is a top plan view of the fourth embodiment and;
Figure 6 is an underneath view of the fourth embodiment.

### Description of preferred embodiment

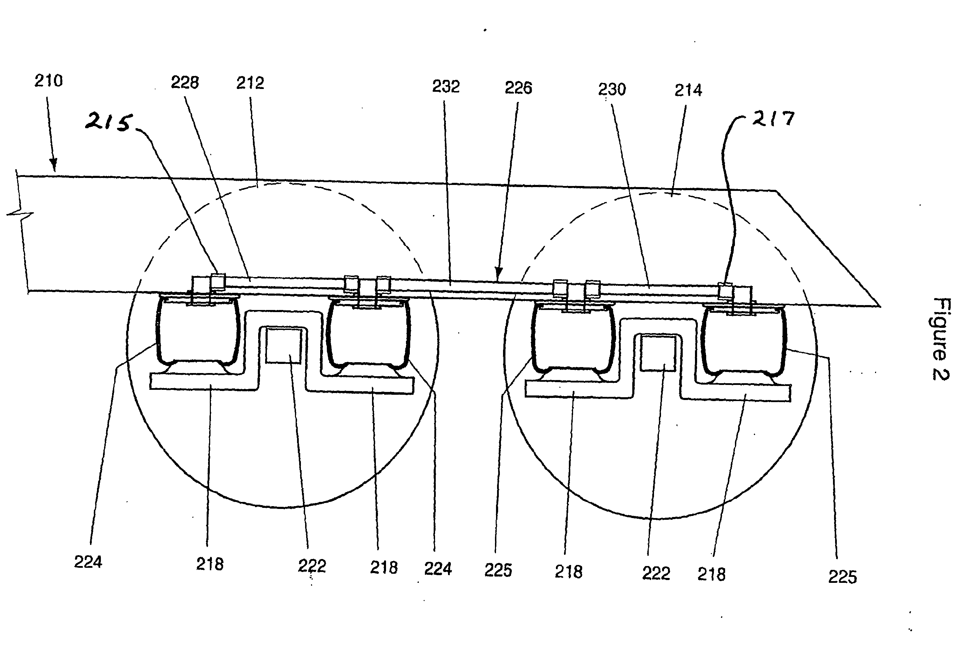

To refer to the drawings, like reference numerals receive like components with a prefix number denoting the relevant embodiment. For example, for the second embodiment of Figure 2, a prefix number 2 is used.

The vehicle in each instance may be any one of the vehicles defined above.

The vehicle has a chassis 10, a front set of driving wheels 12 and a rear set of driving wheels 14. In each instance, there are wheels on either side of the vehicle and the wheels on each side may be single or dual wheels.

For each set of wheels 12, 14, on each side of the vehicle there is a suspension arm mounting bracket 16 and a suspension arm 18 pivotally attached thereto by a pivot pin 20. The suspension arm 18 is somewhat "S"-shaped and passes over, and has attached thereto, the axle 22 of the wheel set. Mounted to the chassis 10 as well as to suspension arms 18 is a front air bag 24 and a rear air bag 25. The nature and operation of air bags in vehicle suspensions is known and will not be described further.

In the present instance, a high flow-rate air tube 26 passes between and is operatively connected to the air bags 24, 25. In this way if the front air bag 24 acts due to the axle 22 moving downwardly, and the rear air bag 25 acts due to the axle 22 thereof moving upwardly, air can be transferred very quickly from the rear air bag 25 to the front air bag 24 thus providing for appropriate downward pressure on suspension arm 18, and thus front axle 22, to enable the front wheel set 12 to have good traction on the ground. In this way it is possible for both wheel sets 12, 14 to retain positive traction on the ground. The air tube 26 is a high flow-rate tube capable of controlling the transfer of a large volume of air at low pressure very quickly, thus decreasing the load on the vehicle's shock absorbers.

Naturally, the tube 26 is capable of having air at appropriate pressure pass therethrough and has appropriate pressure resistant connections. The passage of air through the tube 26 can be in both directions. This therefore provides a more stable ride for the wheel sets 12, 14 as the controlled transfer of air lessens the transmission of forces, caused by uneven surfaces from the vehicle's tyres to the chassis.

To now refer to Figure 2, the chassis 210 is as before and the axles and wheel sets 212, 214, 222, are also as before. However, in this instance there is a suspension saddle 218 for each wheel set 212, 214 and there are two air bags provided for each wheel set 212, 214 - an air bag on each side of each axle 222 and acting between the chassis 210 and suspension saddles 218. As can be seen, the high flow-rate air tube 226 is operatively connected to all four of the air bags 224, 225 by controlling orifices (not shown) in respective air fittings 215 and 217. Therefore, the air bags 224 of the front wheel set 212 are connected by a high flow-rate tube 228, and the air bags 225 of the rear wheel set 214 are connected by a high flow-rate tube 230. The high flow-rate tubes 228, 230 are connected by a high flow-rate tube 232. Naturally, the high flow-rate tubes 228, 230 and 232 may be separate tubes operatively connected, or may be the one tube with operative connections to the air bags 224, 225 depending therefrom.

If desired, the high flow-rate tubes 26 on one side of the vehicle may be connected to the tubes 26 on the other side of the vehicle. Also, the tubes 226 on one side of the vehicle may be connected to the tubes 226 on the other side of the vehicle. Furthermore, there may be independent connection of the tubes 228 and/or 230 and/or 232 from one side of the vehicle to the other side of the vehicle.

If desired, there may be provided an appropriate valve or control mechanism in high flow-rate tubes 26, 226 (and even tubes 228, 230) to control the rate of airflow. This may be desired in certain circumstances. Such a device may also be able to completely close the tube so that, for example, for a coach travelling on major interstate highways the valves can be closed to enable the air bags to work in a normal manner. However, when encountering uneven terrain, or proceeding off road, the driver can merely release the valves or alter their settings to allow for appropriate air transfer from the air bags in accordance with the above description. Any such valves may be able to be controlled from within the cabin of the vehicle, or may be controlled externally.

The air bags 24, 25, 224, 225 are supplied with air from an air supply (not shown). The air supply may, if desired, include an air tank. If an air tank is used it is preferred that the tube from the air tank to the air bags (either directly or via tubes 26, 226) is a low flow-rate tube with above-mentioned controlling orifices in air line fittings 215 and 217 to enable the air tank to act as an accumulator, in much the same way as an accumulator in a hydraulic system. There may, if desired, be a manifold (not shown) between the tubes 26, 226 and each air bag 24, 25, 224, 225.

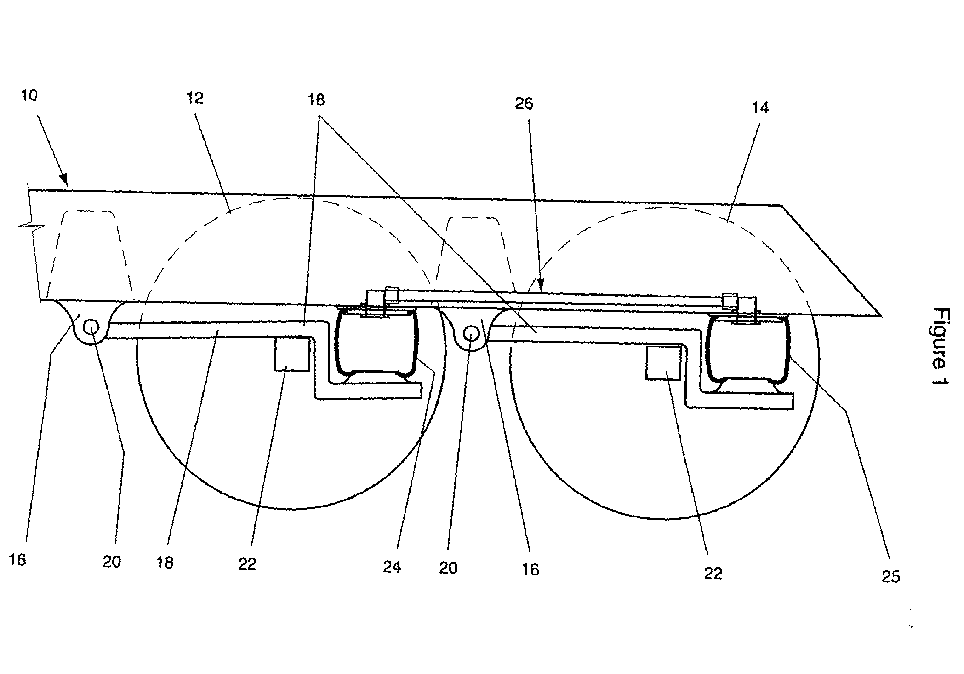

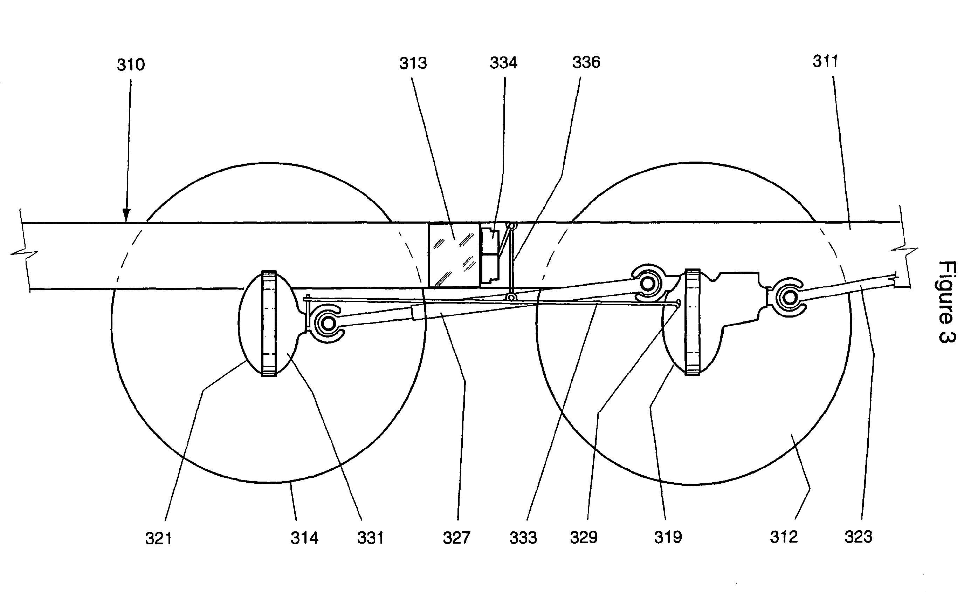

In Figure 3, there is shown a modification suitable for use with the embodiments of Figures 1 and 2. Here, there is a chassis 310 which has two generally-parallel rails 311, and a cross member 313. A front differential 319 drives front wheels 312, and a rear differential 321 drives rear wheels 314, with drive shafts 323 and 327 being used. Pivotally mounted to and extending between the rear 329 of front differential 319 and the front 331 of rear differential 314 is a height valve rocker 333.

Mounted on cross member 313 approximate the centre thereof is a height valve 334 which serves to automatically control the inflation of both front and rear air bags. This is connected to the height valve rocker 333 at approximately the centre thereof by a link 336. Therefore, if the wheels 312,314 pass along a sloping ramp in a reversing mode rear wheels 314 lift but front wheels 312 lower. Therefore, there is little or no movement of the centre of rocker 333. What movement there is of rocker 333 may cause movement of link 336 but by an insufficient amount to automatically operate valve 334 so as to cause valve 334 to effect inflation of all air bags. The inflation of all air bags would make the passing along the ramp impossible. By preventing this, the vehicle could then pass along the ramp by transferring air from one bag to another. However, if both differentials 319,321 move up or down in relative unison, the rocker 333 will cause valve 334 to operate as required and desired. Valve 334 is in the main supply air tube from the air supply to the air bags.

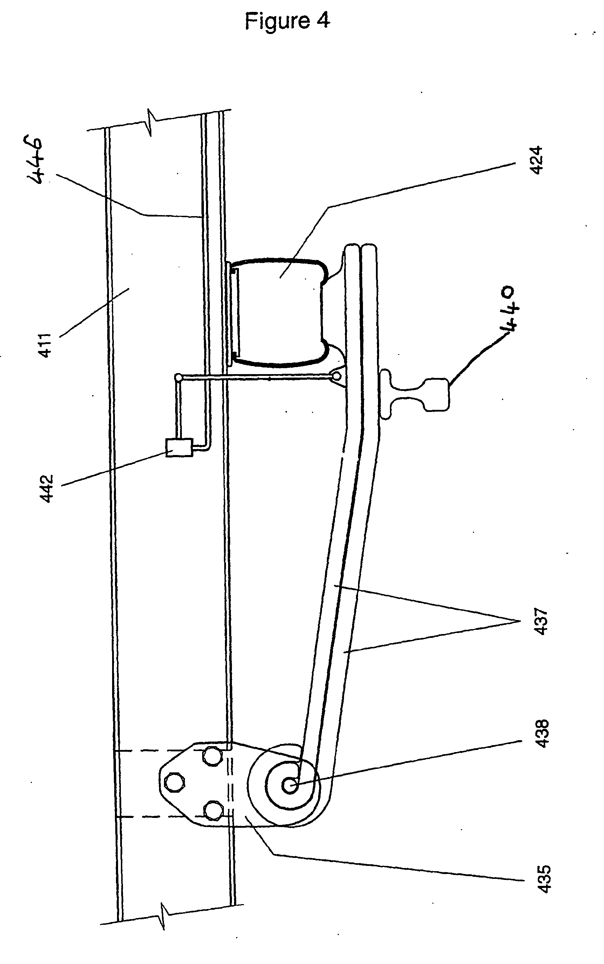

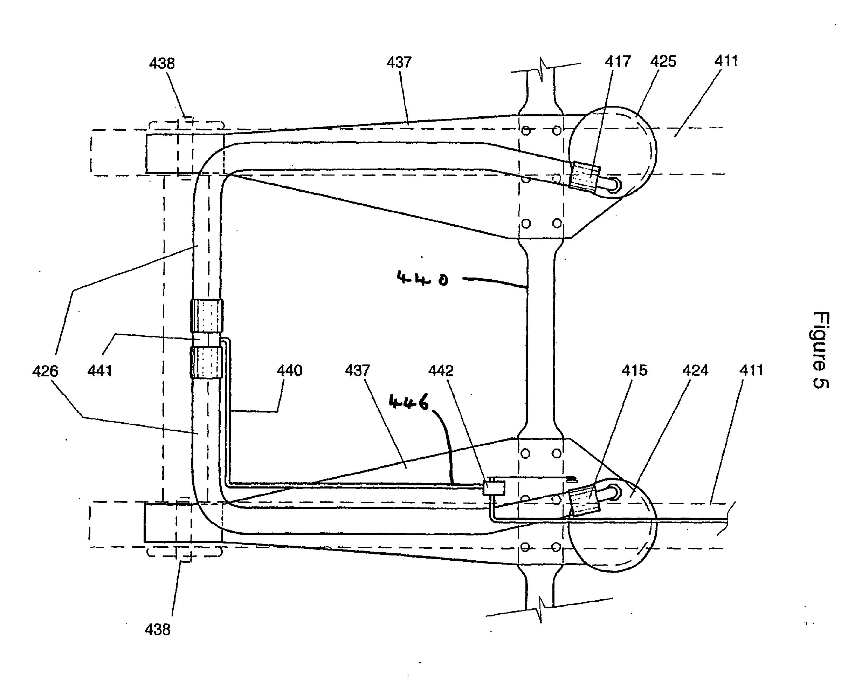

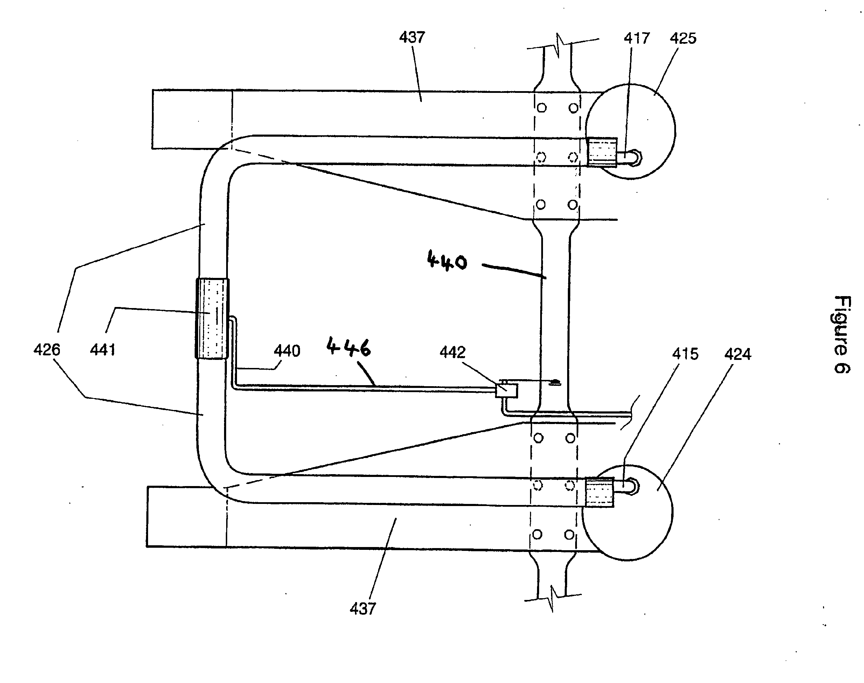

The embodiment of Figures 4 to 6 shows an air bag suspension of the present invention fitted to a steering axle of a vehicle where, although it may be used with any form of axle.

Here there is a rail 411 having a plate 435 depending therefrom. Springs 437 are mounted to plate 435 by a pin 438. Mounted between springs 437 and rail 411 is a left air bag 424 and a right air bag 425. The springs 437 are somewhat wedge shaped, being at their greatest width where they are attached to beam or axle 440. In this way, the springs 437 absorb a significant amount of tension, thereby eliminating the need for a stabiliser bar.

Air under pressure is supplied to and received from air bags 424, 425 by a large diameter air tube 426 extending therebetween, and being connected to left air bag 424 by left fitting 415, and to right air bag 425 by right fitting 417.
The fittings 415, 417 are of reduced diameter when compared to the tube 426 so as to provide a constriction. For example, tube 426 may be a 51mm (2 inch) diameter tube, with fittings 415, 417 being 19mm (3/4 of an inch) in diameter, thus providing or being the controlling orifice.

Air under pressure is supplied to tube 426 from a standard air hose 446 via a connector 441 at approximately the mid-point of tube 426. The connector 441 is of tube 426 and has a reduced diameter of the order of 6mm (1/4 of an inch) - to provide a constriction in tube 426 between air bags 424,425.

By having air tube 426 of a much larger diameter than connector 441 and fittings 415,417 air tube 426 also acts as a manifold.

A low flow, height control valve 442 in air hose 446 also acts to constrict air hose 446.

By virtue of the constrictions of connectors 415,417 air under pressure due to compression of either or both air bags 424,425 will be forced into tube 426 - tube 426 acting as a the compression in air bags 424,425 is different, connector 441 will allow air flow therebetween at a controlled rate so as to equalise the pressure, the controlled rate of air flow acting to dampen any oscillations and minimise or eliminate tramping.

The constriction provided by fittings 415,417 slows the return of air into air bags 424,425 thus significantly reducing, or eliminating, tramping as the wheel is not driven into the road surface by a rapid supply of air under pressure. The air is returned to air bags 424,425 at a reduced rate.

With the present invention, it may be possible to use an air bag suspension without the usual shock absorbers. Alternatively, shock absorbers may be used but may be of reduced rating or capacity. Further alternatively, regularly rated shock absorbers may be used but should have an increased working life due to the reduced load applied to them. This is due to the dampening effect the present invention has on any oscillations (particularly tramping) in the suspension, the dampening effect being due to a number of factors including, but not limited to, one or more of: the controlling orifices in the air fittings, the manifold effect created by the air fittings and/or the air hose, any separate manifold, the inherent nature of the air bags themselves and them being operatively connected, and frictional losses.

Whilst there has been described in the foregoing description preferred embodiments improvements in vehicle suspension incorporating the principal features of the present invention, it will be realised by those skilled in the technology concerned that many variations or modifications and details of design or construction may be made without departing from the essential features of the present invention. In particular, it is noted pneumatic and hydraulic embodiments are both possible.

It will also be understood that the term "comprises" (or its grammatical variants) as used in this specification is equivalent to the term "includes" and should not be taken as excluding the presence of other elements or features.

## Claims

1. An air suspension system for use with a vehicle having wheels (12, 14; 212, 214), the suspension system including:
at least two air bags (24, 25; 224, 225; 424, 425) arranged as a first air bag and a second air bag for controlling relative movement between the wheel (12, 14; 212, 214) and a chassis (10; 210; 411) of the vehicle, and
air supply means (446) for supplying air to the air bags (24, 25; 224, 225; 424, 425), and
a high flow-rate air tube (26; 226, 228, 230; 426) operatively connected between the first air bag and the second air bag, wherein the high flow-rate air tube (26; 226, 228, 230; 426) forms a manifold to which air is passed from an air bag (24, 25; 224, 225; 424, 425) when air pressure in that air bag (24, 25; 224, 225; 424, 425) increases above air pressure in the manifold;
**characterised in that** the suspension system further comprises:
air flow controlling orifices provided between the air bags (24, 25; 224, 225; 424, 425) and the high flow-rate air tube (26; 226, 228, 230; 426) for slowing the flow of air into the air bags (24, 25; 224, 225; 424, 425), the controlling orifices being a reduction in diameter compared to that of the high flow-rate air tube (26; 226, 228, 230; 426).

2. A suspension system as claimed in claim 1, wherein at least two wheels (12, 14; 212, 214) are arranged as a forward wheel (12; 212) on a forward axle (22; 222), and a rear wheel on a rear axle (22; 222), the first air bag (24; 224; 424) being a forward air bag operatively connected to the forward axle (22) and the second air bag (25; 225; 425) being a rear air bag being operatively connected to the rear axle (22).

3. A suspension system as claimed in claim 2, wherein two air bags (24; 224; 424) are provided for the forward axle (22; 222), and two air bags (25; 225; 425) for the rear axle (22; 222), each of the pair of air bags being located on opposite sides of the relevant axle (22).

4. A suspension system as claimed in any one of claims 1 to 3 , wherein the high flow-rate air tube (26; 226, 228, 230; 426) has a first end with a first fitting (215; 415), and a second end with a second fitting (217; 417).

5. A suspension system as claimed in claim 4, wherein the first fitting (215; 415) and/or the second fitting (217; 417) has the controlling orifice therein to slow the rate of air flow between the air tube (26; 226, 228, 230; 426) and the respective air bags (24, 25; 224, 225; 424, 425).

6. A suspension system as claimed in claim 4, further including a separate but integral air manifold on any one or more of the high flow-rate air tube (26; 226, 228, 230; 426), the first fitting (215; 415) and the second fitting (217; 417).

7. A suspension system as claimed in any one of claims 1 to 6, wherein there is provided a low flow-rate air tube (446) for supplying air under pressure to the high flow-rate air tube (26; 226, 228, 230; 426).

8. A suspension system as claimed in claim 7, wherein the low flow-rate air tube (446) is connected to the high flow-rate air tube (26; 226, 228, 230; 426) by an air fitting (441) in-line of the high flow-rate air tube (26; 226, 228, 230; 426).

9. A suspension system as claimed in claim 8, wherein the air fitting (441) has a constriction therein.

10. A suspension system as claimed in any one of claims 1 to 9, further including a height valve (334; 442) controlling the operative connection between the at least two air bags (24, 25; 224, 225; 424, 425).

11. A suspension system as claimed in claim 10 wherein the height control valve (334; 442) is connected to the air supply means (446).

12. A suspension system as claimed in claim 10 or claim 11, wherein the height valve (334; 442) is controllable by a height valve rocker (333) located between the first air bag (24; 224; 424) and the second air bag (25; 225; 425).

13. A suspension system as claimed in claim 8, wherein the air fitting (441) is located at approximately the mid-point of the high flow-rate air tube (26; 226, 228, 230; 426).

14. A suspension system as claimed in claim 13, wherein the high flow-rate air tube (26; 226, 228, 230; 426) has a diameter of 51mm (2 inches); the first and second fittings (215, 217; 415, 417) are each of a diameter of 19mm (¾ inch), and the air fitting constriction (441) is of a diameter of 6mm (¼ inch).

15. A vehicle having a suspension system as claimed in any one of claims 1 to 14.

## Patentansprüche

1. Luftfederungssystem zur Verwendung mit einem Fahrzeug, das Räder (12, 14; 212, 214) aufweist, wobei das Federungssystem folgendes einschließt:
zumindest zwei Luftfedern (24, 25; 224, 225; 424, 425) die als eine erste Luftfeder und eine zweite Luftfeder zur Steuerung der Relativbewegung zwischen dem Rad (12, 14; 212, 214) und einem Fahrgestell (10: 210; 411) des Fahrzeuges angeordnet sind; und
eine Luftzufuhr-Einrichtung (446) zur Lieferung von Luft an die Luftfeder (24, 25; 224, 225; 424, 425), und
eine eine hohe Strömungsrate aufweisendes Luftleitung (26; 226, 228, 230; 426), die betriebsmäßig zwischen der ersten Luftfeder und der zweiten Luftfeder angeordnet ist, wobei die eine hohe Strömungsrate aufweisende Luftleitung (26; 226, 228, 230; 426) eine Verzweigung bildet, der Luft von einer Luftfeder (24, 25; 224, 225; 424, 425) zugeführt wird, wenn der Luftdruck in dieser Luftfeder (24, 25; 224, 225; 424, 425) über den Luftdruck in der Verzweigung ansteigt; **dadurch gekennzeichnet, dass** das Federungssystem weiterhin folgendes umfasst:
Luftströmungs-Steuerblenden, die zwischen den Luftfedern (24, 25; 224, 225; 424, 425) und der eine hohe Strömungsrate aufweisenden Lufleitung (26; 226, 228, 230; 426) angeordnet sind, um die Luftströmung in die Luftfedern (24, 25; 224, 225; 424, 425) zu verlangsamen, wobei die Steuerblenden durch eine Verringerung des Durchmessers verglichen mit dem der eine hohe Strömungsrate aufweisenden Luftleitung (26; 226, 228, 230; 426) gebildet sind.

2. Federungssystem nach Anspruch 1, bei dem zumindest zwei Räder (12, 14; 212, 214) als ein vorderes Rad (12; 212) auf einer vorderen Achse (22; 222) und ein hinteres Rad auf einer hinteren Achse (22; 222) angeordnet sind, wobei die erste Luftfeder (24; 224; 424) eine vordere Luftfeder, die betriebsmäßig mit der vorderen Achse (22) verbunden ist, und die zweite Luftfeder (25; 225; 425) eine hintere Luftfeder ist, die betriebsmäßig mit der hinteren Achse (22) verbunden ist.

3. Federungssystem nach Anspruch 2, bei dem zwei Luftfedern (24; 224; 424) für die vordere Achse (22; 222) und zwei Luftfedern (25; 225; 425) für die hintere Achse (22; 222) vorgesehen sind, wobei jede des Paares von Luftfedern auf entgegengesetzten Seiten der betreffenden Achse (22) angeordnet sind.

4. Federungssystem nach einem der Ansprüche 1 bis 3, bei dem die eine hohe Strömungsrate aufweisende Luftleitung (26; 226, 228, 230; 426) ein erstes Ende mit einem ersten Anschluss-Stück (215; 415) und ein zweites Ende mit einem zweiten Anschluss-Stück (217; 417) aufweist.

5. Federungssystem nach Anspruch 4, bei dem das erste Anschluss-Stück (215; 415) und/oder das zweite Anschluss-Stück (217; 417) die Steuerblende enthält, um die Rate der Luftströmung zwischen der Luftleitung (26; 226, 228, 230; 426) und den jeweiligen Luftfedern (24, 25; 224, 225; 424, 425) zu verlangsamen.

6. Federungssystem nach Anspruch 4, das eine getrennte, jedoch einstückige Luftverzweigung an irgendeiner oder mehreren der eine hohe Strömungsrate aufweisenden Luftleitung (26; 226, 228, 230; 426), des ersten Anschluss-Stückes (215, 415) und des zweiten Anschluss-Stückes (217; 417) aufweist.

7. Federungssystem nach einem der Ansprüche 1 bis 6, bei dem eine eine niedrige Strömungsrate aufweisende Luftleitung (446) zur Zuführung von unter Druck stehender Luft an die eine hohe Strömungsrate aufweisende Luftleitung (26; 226, 228, 230; 426) vorgesehen ist.

8. Federungssystem nach Anspruch 7, bei dem die eine niedrige Strömungsrate aufweisende Luftleitung (446) mit der eine hohe Strömungsrate aufweisenden Luftleitung (26; 226, 228, 230; 426) über ein Luft-Anschluss-Stück (441) im Verlauf der eine hohe Strömungsrate aufweisenden Luftleitung (26; 226, 228, 230; 426) verbunden ist.

9. Federungssystem nach Anspruch 8, bei dem das Luft-Anschluss-Stück (441) eine darin ausgebildete Einschnürung aufweist.

10. Federungssystem nach einem der Ansprüche 1 bis 9, das ein Höhenventil (334; 442) einschließt, um die Betriebsverbindung zwischen den zumindest zwei Luftfedern (24, 25; 224, 225; 424, 425) zu steuern.

11. Federungssystem nach Anspruch 10, bei dem das Höhen-Steuerventil (334; 442) mit den Luftzufuhr-Einrichtungen (446) verbunden ist.

12. Federungssystem nach Anspruch 10 oder Anspruch 11, bei dem das Höhen-Ventil (334; 442) durch eine Höhen-Ventil-Wippe (333) steuerbar ist, die zwischen der ersten Luftfeder (24; 224; 424) und der zweiten Luftfeder (25; 225; 425) liegt.

13. Federungssystem nach Anspruch 8, bei dem das Luft-Anschluss-Stück (441) an ungefähr dem Mittelpunkt der eine hohe Strömungsrate aufweisenden Luftleitung (26; 226, 228, 230; 426) liegt.

14. Federungssystem nach Anspruch 13, bei dem die eine hohe Strömungsrate aufweisende Luftleitung (26; 226, 228, 230; 426) einen Durchmesser von 51 mm (2 Zoll) aufweist; die ersten und zweiten Anschluss-Stücke (215, 217; 415, 417) jeweils einen Durchmesser von 19 mm (¾ Zoll) aufweisen, und die Luft-Anschluss-Stück-Einschnürung (441) einen Durchmesser von 6 mm (¼ Zoll) aufweist.

15. Fahrzeug mit einem Federungssystem, wie es in irgendeinem der Ansprüche 1 bis 14 beansprucht ist.

## Revendications

1. Système de suspension à air pour l'utilisation avec un véhicule comportant des roues (12, 14 ; 212, 214) , le système de suspension comprenant :
au moins deux coussins d'air (24, 25 ; 224, 225 ; 424, 425) disposés en tant que premier coussin d'air et second coussin d'air pour commander le mouvement relatif entre la roue (12, 14 ; 212, 214) et un châssis (10 ; 210 ; 411) du véhicule, et
des moyens d'alimentation d'air (446) pour amener l'air aux coussins d'air (24, 25 ; 224, 225 ; 424, 425),
un tube d'air à débit élevé (26 ; 226, 228, 230 ; 426) raccordé de façon opérante entre le premier coussin d'air et le second coussin d'air, dans lequel le tube d'air à haut débit (26 ; 226, 228, 230 ; 426) forme un collecteur dans lequel l'air est amené à partir d'un coussin d'air (24, 25 ; 224, 225 ; 424, 425) lorsque la pression d'air dans ce coussin d'air (24, 25 ; 224, 225 ; 424, 425) augmente au-dessus de la pression d'air dans le collecteur,
**caractérisé en ce que** le système de suspension comprend de plus :
des orifices de commande de débit d'air entre les coussins d'air (24, 25 ; 224, 225 ; 424, 425) et le tube d'air à haut débit (26 ; 226, 228, 230 ; 426) pour ralentir le débit d'air à destination des coussins d'air (24, 25 ; 224, 225 ; 424, 425), les orifices de commande présentant une réduction de diamètre par rapport à celui du tube d'air à haut débit (26 ; 226, 228, 230 ; 426).

2. Système de suspension selon la revendication 1, dans lequel au moins deux roues (12, 14 ; 212, 214) sont disposées en tant que roue avant (12 ; 212) sur un essieu avant (22 ; 222) et une roue arrière sur un essieu arrière (22 ; 222), le premier coussin d'air (24 ; 224 ; 424) étant un coussin d'air avant raccordé de façon opérante à l'essieu avant (22) et le second coussin d'air (25 ; 225 ; 425) étant un coussin d'air arrière étant raccordé de façon opérante à l'essieu arrière (22).

3. Système de suspension selon la revendication 2, dans lequel deux coussins d'air (24 ; 224 ; 424) sont prévus pour l'essieu avant (22 ; 222) et deux coussins d'air (25 ; 225 ; 425) pour l'essieu arrière (22 ; 222), chacun de la paire des coussins d'air étant situé sur les côtés opposés de l'essieu approprié (22).

4. Système de suspension selon l'une quelconque des revendications 1 à 3, dans lequel le tube d'air haut débit (26 ; 226, 228, 230 ; 426) présente une première extrémité avec une première garniture (215 ; 415) et une seconde extrémité avec une seconde garniture (217 ; 417).

5. Système de suspension selon la revendication 4, dans lequel la première garniture (215 ; 415) et/ou la seconde garniture (217 ; 417) comportent l'orifice de commande pour ralentir le débit d'air entre le tube d'air (26 ; 226, 228, 230 ; 426) et les coussins d'air respectifs (24, 25 ; 224, 225 ; 424, 425).

6. Système de suspension selon la revendication 4, comprenant de plus un collecteur d'air séparé mais solidaire sur l'un quelconque ou plusieurs des tubes d'air haut débit (26 ; 226, 228, 230 ; 426), la première garniture (215 ; 415) et la seconde garniture (217 ; 417).

7. Système de suspension selon l'une quelconque des revendications 1 à 6, dans lequel il est prévu un tube d'air bas débit (446) pour alimenter l'air sous pression vers le tube d'air haut débit (26 ; 226, 228, 230 ; 426).

8. Système de suspension selon la revendication 7, dans lequel le tube d'air bas débit (446) est raccordé au tube d'air haut débit (26 ; 226, 228, 230 ; 426) par une garniture d'air (441) en ligne avec le tube d'air haut débit (26 ; 226, 228, 230 ; 426) .

9. Système de suspension selon la revendication 8, dans lequel la garniture d'air (441) comporte un étranglement.

10. Système de suspension selon l'une quelconque des revendications 1 à 9, comprenant de plus une soupape de hauteur (334 ; 442) commandant le raccordement opérant entre les au moins deux coussins d'air (24, 25 ; 224, 225 ; 424, 425).

11. Système de suspension selon la revendication 10, dans lequel la soupape de commande de hauteur (334 ; 442) est raccordée au moyen d'alimentation d'air (446).

12. Système de suspension selon la revendication 10 ou la revendication 11, dans lequel la soupape de contrôle de hauteur (334 ; 442) peut être commandée par un culbuteur de soupape de hauteur (333) situé entre le premier coussin d'air (24 ; 224 ; 424) et le second coussin d'air (25 ; 225 ; 425).

13. Système de suspension selon la revendication 8, dans lequel la garniture d'air (441) est située environ au milieu du tube d'air haut débit (26 ; 226, 228, 230 ; 426).

14. Système de suspension selon la revendication 13, dans lequel le tube d'air haut débit (26 ; 226, 228, 230 ; 426) a un diamètre de 51 mm (2 pouces) ; les première et seconde garnitures (215, 217 ; 415, 417) sont chacune d'un diamètre de 19 mm (3/4 pouce) et l'étranglement de la garniture d'air (441) a un diamètre de 6 mm (1/4 pouce).

15. Véhicule comportant un système de suspension tel que défini dans l'une quelconque des revendications 1 à 1 à 14.
